# EUROPEAN PATENT APPLICATION

(11) **EP 4 852 086 A1**
(43) Date of publication of application: **09.12.2026**
(21) Application number: 24922012.0
(22) Date of filing: 09.12.2024
(51) Int. Cl.: H01M 4/38, H01M 4/36

(54) **NEGATIVE ELECTRODE MATERIAL FOR SECONDARY BATTERY, NONAQUEOUS ELECTROLYTE SECONDARY BATTERY, AND METHOD FOR MANUFACTURING NEGATIVE ELECTRODE MATERIAL FOR SECONDARY BATTERY**

(30) Priority: 30.01.2024 JP 2024011634
(71) Applicant: Panasonic Intellectual Property Management Co., Ltd., Kadoma-shi, Osaka 571-0057 (JP)
(72) Inventor: URATA, Sho, kadoma-shi, Osaka 571-0057 (JP)
(74) Representative: Eisenführ Speiser
(86) International application number: PCT/JP2024/043448
(87) International publication number: WO 2025/164094

(57) **Abstract**

A negative electrode material for a secondary battery according to the present disclosure includes: particles of an alloy-based active material that alloys with lithium; and a cross-linked polymer, wherein the cross-linked polymer covers outer surfaces of the particles of the alloy-based active material in a shell-like manner.

## Description

### [Technical Field]

The present invention relates to a negative electrode material for a secondary battery, a non-aqueous electrolyte secondary battery, and a method for manufacturing a negative electrode material for a secondary battery.

### [Background Art]

In recent years, for a non-aqueous electrolyte secondary battery including a positive electrode, a negative electrode facing the positive electrode, a separator interposed between the positive electrode and the negative electrode, and a non-aqueous electrolytic solution, there has been a need to improve the cycle characteristics by covering an outer surface of a negative electrode active material included in the negative electrode with a polymer.

Patent Literature 1 listed below describes covering an outer surface of a negative electrode active material with polyacrylic acid (hereinafter referred to as "polyacrylic resin A") containing a carboxyl group and an acid anhydride group. Specifically, Patent Literature 1 describes producing a slurry in which the negative electrode active material and the polyacrylic acid A are uniformly dispersed, and subsequently spray-drying the produced slurry using a spray dryer or the like, thus covering the outer surface of the negative electrode active material with the polyacrylic resin A. Also, Patent Literature 1 listed below describes that the use of the above-described negative electrode active material improves the high-temperature cycle characteristics of the non-aqueous electrolyte secondary battery.

Patent Literature 2 listed below describes a composite negative electrode material for a lithium ion battery (a negative electrode material for a secondary battery) including a negative electrode active material that is Si, SiOₓ (where 1 ≤ x ≤ 2), or a silicon alloy, and a covering layer that covers an outer surface of a negative electrode active material. Patent Literature 2 listed below also describes that the covering layer includes a polymer obtained by cross-linking a polymer precursor having a specific structural formula so as to form a mesh-like structure. Patent Literature 2 listed below further describes attaching the polymer precursor to the outer surface of the negative electrode active material by spray drying, and subsequently cross-linking the polymer precursor on the outer surface of the negative electrode active material, thus providing a cross-linked covering on the outer surface of the negative electrode active material. Also, Patent Literature 2 listed below describes that providing the cross-linked covering on the outer surface of the negative electrode active material enhances the electrochemical cycle performance of a non-aqueous electrolyte secondary battery.

### [Citation List]

### [Patent Literatures]

Patent Literature 1: Japanese Laid-Open Patent Publication No. 2017-152122
Patent Literature 2: Japanese Laid-Open Patent Publication No. 2015-50188

### [Summary of Invention]

### [Technical Problem]

Meanwhile, in a case where the negative electrode active material is a material (hereinafter referred to as an "alloy-based active material") such as silicon (Si) or tin (Sn) that alloys with lithium, the alloy-based active material repeatedly undergoes more significant expansion and contraction during charging and discharging than a case where the negative electrode active material is a carbon-based material. When an outer surface of the alloy-based active material is covered with a polymer or the like as described above, the polymer covering layer may be unable to flexibly conform to the significant expansion and contraction during charging and discharging, resulting in a defect (cracking) in the polymer covering layer. When a defect (cracking) occurs in the polymer covering layer in this manner, a non-aqueous electrolytic solution may come into contact with the outer surface of the alloy-based active material in the defective portion, thus causing decomposition of the non-aqueous electrolytic solution. Then, as a result of the occurrence of such decomposition of the non-aqueous electrolytic solution, the cycle characteristics of the non-aqueous electrolyte secondary battery may not be sufficiently maintained. However, it cannot be said that thorough investigation has been conducted as to sufficiently maintain the cycle characteristics of the non-aqueous electrolyte secondary battery in the case of using the alloy-based active material covered with a polymer or the like.

Therefore, an object of the present disclosure is to provide a non-aqueous electrolyte secondary battery capable of sufficiently maintaining the cycle characteristics, a negative electrode material for a secondary battery for use in the non-aqueous electrolyte secondary battery, and a method for manufacturing the negative electrode material for a secondary battery.

### [Solution to Problem]

An aspect of the present invention relates to a negative electrode material for a secondary battery, including: particles of an alloy-based active material that alloys with lithium; and a cross-linked polymer, wherein the cross-linked polymer covers outer surfaces of the particles of the alloy-based active material in a shell-like manner.

Another aspect of the present invention relates to a non-aqueous electrolyte secondary battery including: a positive electrode; a negative electrode facing the positive electrode; a separator disposed between the positive electrode and the negative electrode; and a non-aqueous electrolyte, wherein the negative electrode includes the above-described negative electrode material for a secondary battery.

Still another aspect of the present invention relates to a method for manufacturing a negative electrode material for a secondary battery, the method including: a first step of obtaining a mixed solution containing a monomer, a cross-linking agent for the monomer, and particles of an alloy-based active material that alloys with lithium; a second step of adding a poor solvent for the monomer to the mixed solution after the first step, to obtain a droplet containing the monomer and the cross-linking agent; and a third step of polymerizing the monomer and the cross-linking agent contained in the droplet after the second step, to cover outer surfaces of the particles of the alloy-based active material with a shell-like cross-linked polymer.

### [Advantageous Effects of Invention]

According to the present disclosure, it is possible to provide a non-aqueous electrolyte secondary battery capable of sufficiently maintaining the cycle characteristics, a negative electrode material for a secondary battery for use in the non-aqueous electrolyte secondary battery, and a method for manufacturing the negative electrode material for a secondary battery.

### [Brief Description of Drawing]

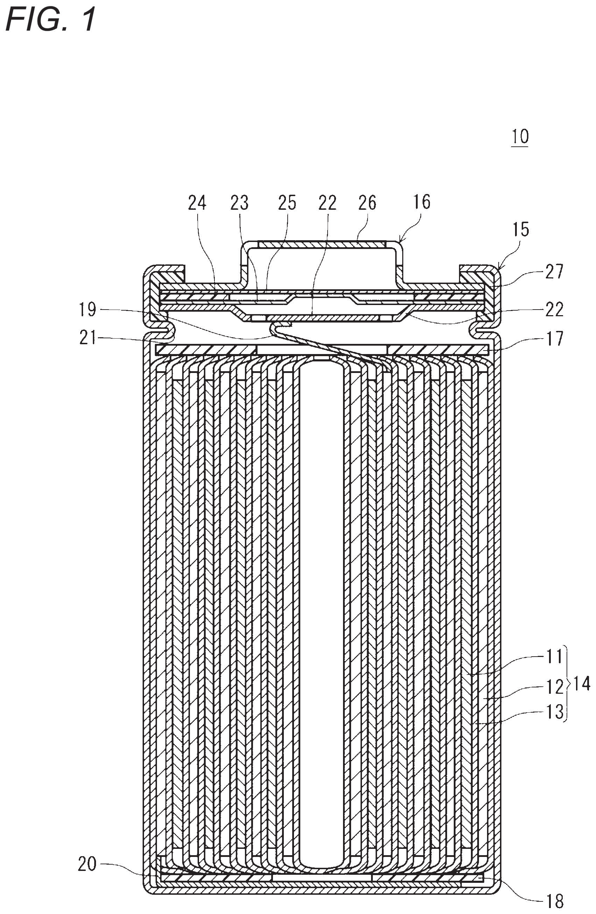

[FIG. 1] A vertical cross-sectional view schematically showing a non-aqueous electrolyte secondary battery according to a first embodiment.

### [Description of Embodiments]

In the following, embodiments of the present disclosure will be described by way of examples. However, the present disclosure is not limited to the examples described below. Although examples of specific numerical values and materials may be given in the following description, other numerical values, materials, and the like may be used as long as the effects of the present disclosure can be achieved. Note that known constituent elements may be used as constituent elements of parts that are characteristic of the present disclosure. As used herein, in the expression "a range from a numerical value A to a numerical value B", this range includes the numerical value A and the numerical value B.

In the following description, when examples of the lower and upper limits of a numerical value related to a specific physical property, condition, or the like are given, any one of the given examples of the lower limit and any one of the given examples of the upper limit can be freely combined as long as the lower limit is not equal to or not greater than the upper limit. When a plurality of materials are given as examples, one of the materials may be selected and used alone, or two or more of the materials may be used in combination unless otherwise stated.

The present disclosure encompasses combinations of matters recited in two or more claims freely selected from a plurality of claims recited in the appended claims. That is, matters recited in two or more claims freely selected from a plurality of claims recited in the appended claims can be combined as long as there are no technical discrepancies.

### [Negative Electrode Material for Secondary Battery]

A negative electrode material for a secondary battery according to an embodiment of the present disclosure includes particles of an alloy-based active material that alloys with lithium, and a cross-linked polymer. In the negative electrode material for a secondary battery according to an embodiment of the present disclosure, the cross-linked polymer covers outer surfaces of the particles of the alloy-based active material in a shell-like manner. Hereinafter, a cross-linked polymer that covers the outer surfaces of the particles of the alloy-based active material is also referred to as a "polymer shell". A thickness T of the polymer shell is sufficiently smaller than a particle diameter d of the particles of the alloy-based active material, and may be less than or equal to 50% of the particle diameter d. The polymer shell may be a monolayer or a thin multilayer (e.g., a multilayer including 10 layers or less). Inside one polymer shell, a plurality of particles of the alloy-based active material may be included, or one particle of the alloy-based active material may be included. In particular, it is preferable that one particle of the alloy-based active material is included inside one polymer shell. The polymer shell may have a seamless capsule-like structure with no seam. In the negative electrode material for a secondary battery according to an embodiment of the present disclosure, the cross-linked polymer may cover the outer surfaces of the particles of the alloy-based active material so as to substantially form one continuum.

As described above, in the negative electrode material for a secondary battery according to an embodiment of the present disclosure, it is important that the cross-linked polymer covers the outer surfaces of the particles of the alloy-based active material in a shell-like manner. The reason for this will be described below.

In the case of covering outer surfaces of particles of an alloy-based active material layer with a polymer, for example, by spray-drying a mixed solution containing a polymerized polymer and the alloy-based active material, the outer surfaces of the particles of the alloy-based active material will be covered with a plurality of polymerized polymers. In such a case, it is considered that terminal parts of the plurality of polymers overlap each other on the outer surfaces of the particles of the alloy-based active material. Here, since the monomers are chemically bonded to each other, the individual polymers have sufficient bonding strength. However, the terminal parts of the plurality of polymers are physically bonded, and therefore do not necessarily have sufficient bonding strength.

Accordingly, it is considered that, when absorption and desorption of lithium ions are repeated in the particles of the alloy-based active material during charging and discharging of the non-aqueous electrolyte secondary battery, significant expansion and contraction occurs in the particles of the alloy-based active material, so that detachment occurs in the overlapping portions between the terminal parts of the plurality of polymers that do not have sufficient bonding strength. That is, it is considered that a defect (cracking) due to detachment will occur in a portion covered with the polymer. If a defect (cracking) occurs in a portion covered with the polymer in this manner, the non-aqueous electrolyte contained in the non-aqueous electrolyte secondary battery may come into contact with the outer surfaces of the particles of the alloy-based active material, resulting in decomposition of the non-aqueous electrolyte. As a result of the occurrence of such decomposition of the non-aqueous electrolyte, the cycle characteristics of the non-aqueous electrolyte secondary battery may not be sufficiently maintained.

However, in the negative electrode material for a secondary battery according to the present embodiment, the cross-linked polymer covers the outer surfaces of the particles of the alloy-based active material in a shell-like manner. Therefore, there is no overlapping portion between terminal parts of a plurality of polymers. Accordingly, even if significant expansion and contraction occurs in the particles of the alloy-based active material during charging and discharging of the non-aqueous electrolyte secondary battery, the occurrence of detachment in a portion covered with the polymer is suppressed. This suppresses decomposition of the non-aqueous electrolyte, thus making it possible to sufficiently maintain the cycle characteristics of the non-aqueous electrolyte secondary battery. Note that the above-described operation and effect are more suitably achieved in a case where the cross-linked polymer covers the outer surfaces of the particles of the alloy-based active material so as to substantially form one continuum, or in a case where the polymer shell has a seamless capsule-like structure with no seam.

Note that whether the cross-linked polymer covers the outer surface of the alloy-based active material so as to substantially form one continuum can be determined by obtaining a mixed solution by stirring, in water, particles of a composite material in which the outer surface of the alloy-based active material is covered with the polymer (hereinafter simply referred to as a "composite material"), and allowing the mixed solution to stand, followed by visual observation of the mixed solution. Specifically, the above-described determination can be made by observing whether there is any floating polymer detached from the outer surfaces of the particles of the alloy-based active material in the mixed solution after being allowed to stand. Note that, in the above-described determination method, stirring is performed at a rate of 200 rpm for 60 minutes, with 15 g of the particles of the composite material dispersed in 50 g of water. The expression "allowed to stand" means that the mixed solution after being stirred is left standing for 10 minutes or more.

Examples of the alloy-based active material that alloys with lithium include a silicon (Si)-containing material and a tin (Sn)-containing material. From the viewpoint of increasing the capacity, it is preferable to use a silicon (Si)-containing material as the alloy-based active material that alloys with lithium.

The silicon-containing material may be silicon particles. The silicon particles are not particularly limited, and preferably have a particle diameter of 1 nm or more and 10 µm or less. In particular, the silicon particles are preferably nanosized from the viewpoint of reducing the nonuniformity of the concentration of lithium ions, and reducing breakage of the particles. That is, the silicon particles are preferably nano-silicon particles. The particle diameter of the silicon particles is preferably 500 nm or less, for example. When the particle diameter is within the above-described range, the difference in lithium ion concentration between the surface layer portion and the interior of the silicon particles is reduced, and therefore nonuniform volume expansion is less likely to occur in the silicon particles. This significantly reduces breakage of the particles, thus suppressing a reduction in capacity of a lithium ion battery. The particle diameter of the silicon particles is preferably as small as possible, but need not be reduced to be less than 1 nm. It is sufficient that the particle diameter is 1 nm or more, and the particle diameter may be 3 nm or more.

As described above, in the negative electrode material for a secondary battery according to the present disclosure, the outer surfaces of the particles of the alloy-based active material that alloys with lithium are covered with the cross-linked polymer. That is, the negative electrode material for a secondary battery according to the present disclosure is formed as a composite material of the alloy-based active material that alloys with lithium and the cross-linked polymer. Therefore, the particle diameter of the silicon particles can be determined by determining the particle diameters of silicon particle portions of arbitrarily selected 100 composite materials observed in a high resolution transmission electron microscopy (HR-TEM) image, and arithmetically averaging the particle diameters. The composite material observed in the HR-TEM image may be primary particles or secondary particles. In addition, there is no need to distinguish between primary particles and secondary particles. Note that the particle diameter of a silicon particle portion can be calculated as the diameter of an equivalent circle having an area equal to the area of the silicon particle portion that is obtained from the HR-TEM image.

The silicon-containing material may be a composite material including a silicon phase, and a matrix phase in which the silicon phase is dispersed. The matrix phase need only be formed of a material having lithium ion conductivity. The matrix phase includes at least one selected from the group consisting of a silicon oxide phase and a carbon phase, for example. In such a composite material, the silicon contained in the silicon phase reversibly forms an alloy with lithium. Therefore, such a composite material is also capable of reversibly absorbing and desorbing lithium ions.

The silicon oxide phase may contain, in addition to Si and O, an element other than Si and O. The silicon oxide phase may be formed as a silicon dioxide (SiO₂) phase or a lithium silicate phase, or may be formed of these two phases.

In a case where the silicon-containing material is the above-described composite material, the composite material may be formed of one of the following (a) to (c).
(a) A constitution (first composite material) including a silicon phase, and a silicon dioxide (SiO₂) phase in which the silicon phase is dispersed
(b) A constitution (second composite material) including a silicon phase, and a lithium silicate phase in which the silicon phase is dispersed
(c) A constitution (third composite material) including a silicon phase, and a carbon phase in which the silicon phase is dispersed

In a case where the silicon-containing material is the first composite material (in the case of (a) described above), the volume change associated with absorption and desorption of lithium ions can be advantageously reduced. One of the factors contributing to the aforementioned advantage seems to be that the volume shrinkage associated with the desorption of lithium ions is less likely to occur in the first composite material since a relatively large number of sites that irreversibly trap lithium ions are present in the silicon dioxide phase.

The first composite material can be synthesized, for example, by heating a silicon oxide serving as a raw material in a nonoxidizing atmosphere (inert atmosphere) to allow a disproportionation reaction to proceed.

In a case where the silicon-containing material is the second composite material (in the case of (b) described above), the irreversible capacity can be advantageously reduced. Accordingly, the use of the second composite material as the silicon-containing material can achieve excellent charge-discharge efficiency. This effect is particularly pronounced at the initial stage of charging and discharging.

The lithium silicate phase included in the second composite material may contain an element other than Si, O, and Li. Such an element may be at least one selected from the group consisting of Group 1 elements (other than Li) and Group 2 elements in the long-form periodic table. The Group 1 elements and the Group 2 elements may be K, Na, Mg, Ca, Sr, Ba, and the like, for example. The lithium silicate phase may contain Al, B, La, P, Zr, Ti, Fe, Cr, Ni, Mn, Cu, Mo, Zn, and the like.

The ratio (O/Si) of the number of O atoms to the number of Si atoms in the lithium silicate phase is, for example, greater than 2 and less than 4. In this case, in addition to the advantage in terms of the stability of the lithium silicate phase, the advantage in terms of the lithium ion conductivity can be achieved. The O/Si ratio may be greater than 2 and less than 3. The ratio (Li/Si) of the number of Li atoms to the number of Si atoms in the lithium silicate phase is, for example, greater than 0 and less than 4.

Lithium silicate, which is a raw material for obtaining the lithium silicate phase, can be represented by the formula Li_{2z}SiO_{2+z} (0 < z < 2). z preferably satisfies 0 < z < 1. When z is in such a numerical range, the stability of the lithium silicate can be increased. In addition, the formation of the lithium silicate is facilitated. Furthermore, the lithium ion conductivity can be increased when the lithium silicate forms a lithium silicate phase. z is more preferably 1/2.

The second composite material can be obtained, for example, by obtaining a mixture by stirring and mixing lithium silicate and silicon serving as raw materials using a stirrer such as a ball mill while crushing, and thereafter firing the mixture in an inert atmosphere while applying a pressure thereto. Note that the second composite material may also be obtained by heating the mixture to a predetermined temperature to allow at least one of the lithium silicate and silicon to neck in the mixture to obtain a sintered body, and thereafter grinding the sintered body.

Also in a case where the silicon-containing material is the third composite material (in the case of (c) described above), the irreversible capacity can be advantageously reduced. The carbon phase develops a capacity by undergoing a Faradaic reaction with lithium ions, and therefore is advantageous in achieving a capacity increase.

The carbon phase may contain crystalline carbon (graphite) or shapeless carbon (i.e., amorphous carbon) with low crystallinity. The shapeless carbon may be, for example, non-graphitizable carbon or graphitizable carbon, or may be carbon other than these.

The third composite material can be obtained in the same manner as the second composite material except that a carbon source and silicon are used as raw materials.

As the carbon source, it is possible to use, for example, a saccharide, a water-soluble resin, or the like. For example, carboxymethyl cellulose (CMC), polyvinyl pyrrolidone, cellulose, sucrose, or the like may be used as the carbon source. Note that the above-described mixture may be obtained in a state in which the carbon source and silicon are dispersed in an organic solvent such as alcohol.

The alloy-based active material may be aggregated in a state in which the outer surface thereof is covered with the cross-linked polymer. Due to the alloy-based active material being in the form of such aggregated particles, excessive dispersion of the alloy-based active material inside the negative electrode mixture is suppressed. This suppresses an increase in resistance of the negative electrode mixture.

The cross-linked polymer preferably has at least a carboxyl group. The cross-linked polymer more preferably has at least a structural unit derived from an ethylenically unsaturated carboxylic acid monomer, and still more preferably is formed by a structural unit derived from an ethylenically unsaturated carboxylic acid monomer.

The cross-linked polymer can contain a structural unit derived from an ethylenically unsaturated carboxylic acid in an amount of 50 mass% or more and 100 mass% or less, with respect to all structural units thereof. The aforementioned content may be 60 mass% or more, 70 mass% or more, or 80 mass% or more. The aforementioned content may be 99.5 mass% or less, or 99.0 mass% or less.

The cross-linked polymer preferably has a carboxyl group neutralized with a lithium compound. Specifically, the cross-linked polymer preferably has lithium carboxylate (COOLi). Lithium carboxylate can be obtained by neutralizing the carboxyl group included in the cross-linked polymer with a lithium compound such as lithium hydroxide monohydrate (LiOH·H₂O). Lithium carboxylate can be obtained, for example, by stirring and mixing, in acetonitrile, the negative electrode material for a secondary battery according to an embodiment of the present disclosure and lithium hydroxide monohydrate (LiOH·H₂O). Due to the cross-linked polymer having lithium carboxylate, the mixture resistance of the negative electrode can be reduced.

A structural unit derived from an ethylenically unsaturated carboxylic acid monomer can be obtained by polymerizing a monomer including an ethylenically unsaturated carboxylic acid monomer. A structural unit derived from an ethylenically unsaturated carboxylic acid monomer can also be obtained by (co)polymerizing a (meth)acrylic acid ester monomer, followed by hydrolysis, can also be obtained by polymerizing (meth)acrylamide and (meth)acrylonitrile or the like, followed by treatment with strong alkali, and can also be obtained by allowing an acid anhydride to react with a polymer having a hydroxyl group. Note that, as used herein,"(meth)acryl" refers to at least one of acryl and methacryl, and "(meth)acrylo" refers to at least one of acrylo and methacrylo.

Examples of the ethylenically unsaturated carboxylic acid monomer include (meth)acrylic acid, (meth)acrylamide alkyl carboxylic acid, ethylenically unsaturated monomers having a carboxyl group, and (partial) alkali neutralization products thereof. Examples of (meth)acrylamide alkyl carboxylic acid include (meth)acrylamide hexyl carboxylic acid and (meth)acrylamide dodecanoic acid, and examples of the ethylenically unsaturated monomers having a carboxy group include succinic acid monohydroxyethyl (meth)acrylate, ω-carboxy-caprolactone mono(meth)acrylate, and β-carboxyethyl (meth)acrylate. The above-described monomers may be used alone or in a combination of two or more. Among these, because of their high polymerization rates, compounds having an acryloyl group are preferred. Among compounds having an acryloyl group, acrylic acid is particularly preferred. In a case where acrylic acid can be used as the ethylenically unsaturated carboxylic acid monomer, it is possible to obtain a polymer with a high carboxyl group content. Note that, as used herein, "(meth)acrylate" refers to at least one of acrylate and methacrylate.

The cross-linked polymer may include a structural unit derived from another ethylenically unsaturated monomer that is copolymerizable with the ethylenically unsaturated carboxylic acid monomer. Examples of the structural unit derived from another ethylenically unsaturated monomer include structural units derived from an ethylenically unsaturated monomer compound having an anionic group other than a carboxyl group, such as a sulfonic acid group and a phosphoric acid group, or a nonionic ethylenically unsaturated monomer. These structural units can be introduced by copolymerizing an ethylenically unsaturated monomer compound having an anionic group other than an carboxyl group, such as a sulfonic acid group and a phosphoric acid group, or a monomer including a nonionic ethylenically unsaturated monomer. Among these, in terms of the bending resistance, a structural unit derived from a nonionic ethylenically unsaturated monomer is preferred as a structural unit derived from another ethylenically unsaturated monomer.

The cross-linked polymer may include a structural unit derived from another ethylenically unsaturated monomer in an amount of 1 mass% or more and 50 mass% or less, with respect to all structural units thereof. The aforementioned content may be 5 mass% or more and 40 mass% or less, or 10 mass% or more and 30 mass% or less.

Examples of the nonionic ethylenically unsaturated monomer include (meth)acrylamide and derivatives thereof. Examples of (meth)acrylamide derivatives include N-alkyl(meth)acrylamide compounds and N,N-dialkyl (meth)acrylamide compounds. Examples of N-alkyl(meth)acrylamide compounds include isopropyl (meth)acrylamide, t-butyl (meth)acrylamide, N-n-butoxymethyl (meth)acrylamide, and N-isobutoxymethyl (meth)acryl. Examples of N,N-dialkyl (meth)acrylamide compounds include dimethyl (meth)acrylamide and diethyl (meth)acrylamide. These monomers may be used alone or in a combination of two or more.

Examples of the nonionic ethylenically unsaturated monomer also include (meth)acrylic acid esters. Examples of (meth)acrylic acid esters include (meth)acrylic acid alkyl ester compounds, (meth)acrylic acid cycloalkyl ester compounds, (meth)acrylic acid alkoxyalkyl ester compounds, (meth)acrylic acid hydroxyalkyl ester compounds, and (meth)acrylic acid aralkyl ester compounds. Examples of (meth)acrylic acid alkyl ester compounds include methyl (meth)acrylate, ethyl (meth)acrylate, butyl (meth)acrylate, isobutyl (meth)acrylate, and 2-ethylhexyl (meth)acrylate. Examples of (meth)acrylic acid cycloalkyl ester compounds include cyclohexyl (meth)acrylate, and methyl cyclohexyl (meth)acrylate. Examples of (meth)acrylic acid alkoxyalkyl ester compounds include 2-methoxyethyl (meth)acrylate and ethoxyethyl (meth)acrylate. Examples of (meth)acrylic acid hydroxyalkyl ester compounds include hydroxyethyl (meth)acrylate, hydroxypropyl (meth)acrylate, and hydroxybutyl (meth)acrylate. Examples of (meth)acrylic acid aralkyl ester compounds include phenyl (meth)acrylate, phenylmethyl (meth)acrylate, and phenylethyl (meth)acrylate. These monomers may be used alone or in a combination of two or more.

In the cross-linked polymer, the mode of cross-linking is not particularly limited. Examples of the the mode of cross-linking include copolymerization of a cross-linking monomer, the use of chain transfer to the polymer chain during radical polymerization, and synthesizing a copolymer having a reactive functional group, and thereafter adding a cross-linking agent as needed to perform post-cross-linking. Among these, in terms of operational simplicity and ease of control of the degree of cross-linking, cross-linking is preferably achieved with a cross-linking monomer.

As described above, the cross-linked polymer preferably has a structure derived from a cross-linking monomer. Due to the cross-linked polymer having a structure derived from a cross-linking monomer, the elasticity of the cross-linked polymer can be further increased. This makes it possible to further suppress the occurrence of detachment of a portion covered with the polymer even if significant expansion and contraction occurs in the particles of the alloy-based active material during charging and discharging of the non-aqueous electrolyte secondary battery. The cross-linked polymer preferably has a structure in which one polymer having an alkenyl structure in a molecule thereof and another polymer having an alkenyl structure in a molecule thereof are cross-linked by a cross-linking monomer. In such a structure, the one polymer and the other polymer may have the same structure or structures different from each other. Note that the one polymer and the other polymer each having an alkenyl structure can be obtained, for example, by polymerizing the above-described ethylenically unsaturated carboxylic acid monomer. The above-described cross-linked polymer may have a structure of a partial sodium salt partially replaced with sodium.

In a case where the cross-linked polymer is cross-linked by a cross-linking monomer, the amount of the cross-linking monomer used may be, for example, 0.05 mass% or more and 8 mass% or less, 0.1 mass% or more and 7 mass% or less, 0.2 mass% or more and 6 mass% or less, or 0.3 mass% or more and 5 mass% or less, with respect to all constituent monomers of the cross-linked polymer.

Examples of the cross-linking monomer include a polyfunctional polymerizable monomer having two or more polymerizable unsaturated groups, and a monomer having a self-cross-linkable, cross-linking functional group such as a hydrolyzable silyl group.

A polyfunctional polymerizable monomer is a compound having two or more polymerizable functional groups such as a (meth)acryloyl group and an alkenyl group in a molecule thereof. As the polyfunctional polymerizable monomer, it is preferable to use a multifunctional (meth)acrylate compound, a multifunctional alkenyl compound, or a compound having both a (meth)acryloyl group and an alkenyl group. That is, in the negative electrode material for a secondary battery according to an embodiment of the present disclosure, a polymer having cross-linking properties preferably includes a structural unit derived from one of a multifunctional (meth)acrylate compound, a multifunctional alkenyl compound, and a compound having both a (meth)acryloyl group and an alkenyl group. Among these, because of the ease of obtaining a uniform cross-linked structure, a multifunctional alkenyl compound is preferred, and a multifunctional allyl ether compound having a plurality of allyl ether groups in a molecule thereof is more preferred. As used herein, a "(meth)acryloyl group" refers to at least one of an acryloyl group and a methacryloyl group.

Examples of the multifunctional (meth)acrylate compound include di(meth)acrylates of dihydric alcohols, poly(meth)acrylates of tri- or higher-valent polyhydric alcohols, and bisamides. Examples of the di(meth)acrylates include ethylene glycol di(meth)acrylate, propylene glycol di(meth)acrylate, 1,6-hexanediol di(meth)acrylate, polyethylene glycol di(meth)acrylate, and polypropylene glycol di(meth)acrylate. Examples of the poly(meth)acrylates include trimethylolpropane tri(meth)acrylate, tri(meth)acrylate of a trimethylolpropane ethylene oxide modified form, glycerin tri(meth)acrylate, pentaerythritol tri(meth)acrylate, and pentaerythritol tetra(meth)acrylate. Examples of the bisamides include methylene bisacrylamide and hydroxyethyl bisacrylamide.

Examples of the multifunctional alkenyl compound include a multifunctional allyl ether compound, a multifunctional allyl compound, and a multifunctional vinyl compound. Examples of the multifunctional allyl ether compound include trimethylolpropane diallyl ether, trimethylolpropane triallyl ether, pentaerythritol diallyl ether, pentaerythritol triallyl ether, tetraallyloxyethane, polyallyl saccharose, and 1,3-diallyloxy-2-propanol. Examples of the multifunctional allyl compound include diallyl phthalate. Examples of the multifunctional vinyl compound include divinylbenzene.

Examples of the compound having both a (meth)acryloyl group and an alkenyl group include allyl (meth)acrylate, isopropenyl (meth)acrylate, butenyl (meth)acrylate, pentenyl (meth)acrylate, and 2-(2-vinyloxyethoxy)ethyl (meth)acrylate.

Specific examples of the monomer having a self-cross-linkable, cross-linking functional group include a hydrolyzable silyl group-containing vinyl monomer, N-methylol(meth)acrylamide, and N-methoxyalkyl (meth)acrylate. These compounds may be used alone or in a combination of two or more.

The hydrolyzable silyl group-containing vinyl monomer is not particularly limited as long as the monomer is a vinyl monomer having at least one hydrolyzable silyl group. Examples thereof include vinylsilanes, silyl group-containing acrylic acid esters, silyl group-containing methacrylic acid esters, silyl group-containing vinyl ethers, and silyl group-containing esters. Examples of vinylsilane groups include vinyltrimethoxysilane, vinyltriethoxysilane, vinylmethyldimethoxysilane, and vinyldimethylmethoxysilane. Examples of the silyl group-containing acrylic acid esters include trimethoxysilylpropyl acrylate, triethoxysilylpropyl acrylate, and methyldimethoxysilylpropyl acrylate. Examples of silyl group-containing methacrylic acid esters include trimethoxysilylpropyl methacrylate, triethoxysilylpropyl methacrylate, methyldimethoxysilylpropyl methacrylate, and dimethylmethoxysilylpropyl methacrylate. Examples of silyl group-containing vinyl ethers include dimethylmethoxysilylpropyl methacrylate. Examples of silyl group-containing vinyl esters include vinyl trimethoxysilylundecanoate.

As will be described later, the cross-linked polymer can be obtained, for example, by suspension polymerization, reverse-phase suspension polymerization, emulsion polymerization, and the like. Based on this, the negative electrode material for a secondary battery according to an embodiment of the present disclosure may be obtainable by: encapsulating, in a droplet of a polymerization component containing a monomer and a cross-linking agent for the monomer, particles of an alloy-based active material that alloys with lithium; and polymerizing the monomer and the cross-linking agent contained in the droplet, to cover outer surfaces of the particles of the alloy-based active material with a shell-like coating of the polymerization component.

### [Method for Manufacturing Negative Electrode Material for Secondary Battery]

A method for manufacturing a negative electrode material for a secondary battery according to an embodiment of the present disclosure includes: a first step of obtaining a mixed solution containing a monomer, a cross-linking agent for the monomer, and particles of an alloy-based active material that alloys with lithium; a second step of adding a poor solvent for the monomer to the mixed solution after the first step, to obtain a droplet containing the monomer and the cross-linking agent; and a third step of polymerizing the monomer and the cross-linking agent contained in the droplet after the second step, to cover outer surfaces of the particles of the alloy-based active material with a shell-like cross-linked polymer.

As the monomer, it is possible to use the above-described various monomers. For example, it is possible to use an ethylenically unsaturated carboxylic acid monomer, and another ethylenically unsaturated monomer copolymerizable with the ethylenically unsaturated carboxylic acid monomer.

As the cross-linking agent for the monomer, it is possible to use the above-described various cross-linking monomers. For example, it is possible to use a polyfunctional polymerizable monomer having two or more polymerizable unsaturated groups, and a monomer having a self-cross-linkable, cross-linking functional group such as a hydrolyzable silyl group.

In the method for manufacturing a negative electrode material for a secondary battery according to an embodiment of the present disclosure, the polymerization of the monomer and the cross-linking agent is preferably performed using a polymerization initiator. As the polymerization initiator, it is possible to use various known polymerization initiators such as an azo-based compound, an organic peroxide, and an inorganic peroxide.

Examples of the azo-based compound include 2,2'-azobis(2,4-dimethylvaleronitrile), 2,2'-azobis(N-butyl-2-methylpropionamide), 2-(tert-butylazo)-2-cyanopropane, 2,2'-azobis(2,4,4-trimethylpentane), 2,2'-azobis(2-methylpropane), and 4,4'-azobis(4-cyanovaleric acid). These may be used alone or in a combination of two or more.

Examples of the organic peroxide include 2,2-bis(4,4-di-t-butylperoxycyclohexyl)propane, 1,1-di(t-hexylperoxy(cyclohexane), 1,1-di(t-butylperoxy)cyclohexane, n-butyl-4,4-di(t-butylperoxy)valerate, 2,2-di(t-butylperoxy)butane, t-butyl hydroperoxide, cumene hydroperoxide, 1,1,3,3-tetramethylbutyl hydroperoxide, t-butylcumyl peroxide, di-t-butyl peroxide, di-t-hexyl peroxide, di(3,5,5-trimethylhexanoyl)peroxide, dilauroyl peroxide, bis(4-t-butylcyclohexyl)peroxydicarbonate, di-2-ethylhexyl peroxydicarbonate, di-sec-butyl peroxydicarbonate, cumyl peroxyneodecanoate, 1,1,3,3-tetramethylbutyl peroxyneodecanoate, t-hexyl peroxyneodecanoate, t-butyl peroxyneodecanoate, t-butyl peroxyneoheptanoate, t-hexyl peroxypivalate, t-butyl peroxypivalate, 2,5-dimethyl-2,5-di(2-ethylhexanoyl)hexane, 1,1,3,3-tetramethylbutylperoxy-2-ethylhexanoate, t-butylperoxy-2-ethylhexanoate, t-butyl peroxylaurate, t-butylperoxy-3,5,5-trimethylhexanoate, t-hexyl peroxyisopropyl monocarbonate, t-butyl peroxyisopropyl monocarbonate, t-butyl peroxyacetate, t-hexyl peroxybenzoate, and t-butyl peroxybenzoate. These may be used alone or in a combination of two or more.

Examples of the inorganic peroxide include potassium persulfate, sodium persulfate, and ammonium persulfate. In a case where the monomer and the cross-linking agent are polymerized by oxidation reduction polymerization (redox polymerization), a reducing agent may also be used in addition to the inorganic peroxide. Examples of the reducing agent include sodium sulfite, sodium thiosulfate, sodium formaldehyde sulfoxylate, ascorbic acid, sulfur dioxide (SO₂), and ferrous sulfate.

As described above, in the case of using a polymerization initiator, the polymerization initiator preferably penetrates into a droplet containing the monomer and the cross-linking agent. Due to the polymerization initiator penetrating into the droplet, a polymerization reaction between the monomer and the cross-linking agent can be quickly started.

Assuming that the total amount of the monomer components (the monomer and the cross-linking agent) is 100 parts by mass, the content of the polymerization initiator may be 0.001 parts by mass or more and 2 parts by mass or less, 0.005 parts by mass or more and 1.5 parts by mass or less, or 0.01 parts by mass or more and 1.0 parts by mass or less.

The concentration of the monomer components at the start of polymerization is usually 2 mass% or more and 30 mass% or less, and may be 5 mass% or more and 30 mass% or less. The polymerization temperature may be, for example, 0°C or more and 100°C or less, or 20°C or more and 80°C or less. The polymerization temperature may be constant during the polymerization reaction, or may fluctuate during the polymerization reaction. The polymerization time may be 1 minute or more and 20 hours or less, or 1 hour or more and 10 hours or less.

In the method for manufacturing a negative electrode material for a secondary battery according to an embodiment of the present disclosure, the monomer and the cross-linking agent may be polymerized in a state in which the particles of the alloy-based active material are encapsulated in the droplet. Here, in the above-described polymerization using a droplet, it is often the case that a particle diameter D1 of the droplet is usually in the range from several tens of nm to 1000 µm. A particle diameter D2 of the particles of the alloy-based active material is often nanosized, or in the range from submicron to several microns. Accordingly, in order to cause the particles of the alloy-based active material to sufficiently penetrate into the droplet, the ratio (D1/D2) of the particle diameter D1 of the droplet to the particle diameter D2 of the particles of the alloy-based active material is preferably 1.02 or more, more preferably 1.10 or more, and still more preferably 1.20 or more. D1/D2 may be 100 or less, 10 or less, or 5 or less. Note that the monomer and the cross-linking agent may be polymerized in a state in which a plurality of particles of the alloy-based active material are encapsulated in one droplet, or the monomer and the cross-linking agent may be polymerized in a state in which one particle of the alloy-based active material is encapsulated in one droplet. The alloy-based active material may be nanoparticles having a nanosized particle diameter. As the nanoparticles, it is preferable to use nano-silicon particles.

As previously described, the particle diameter D2 of the particles of the alloy-based active material can be determined using a high resolution transmission electron microscopy (HR-TEM) image. The particle diameter D1 of the droplet can be determined by observing liquid collected from the poor solvent for the monomer with a transmission electron microscope (SEM). Specifically, the particle diameter D1 can be determined as an arithmetic mean value of the particle diameters of arbitrarily selected 100 droplets observed in a SEM image.

In the method for manufacturing a negative electrode material for a secondary battery according to an embodiment of the present disclosure, in the second step, the droplet containing the monomer and the cross-linking agent may be obtained by suspending the monomer and the cross-linking agent in the poor solvent for the monomer. That is, in the method for manufacturing a negative electrode material according to an embodiment of the present disclosure, the polymerization of the monomer and the cross-linking agent may be performed by suspension polymerization or reverse-phase suspension polymerization. Note that, in a case where the monomer is a water-soluble monomer, and the poor solvent for the monomer is a non-aqueous solvent, the polymerization of the monomer and the cross-linking agent is performed by reverse-phase suspension polymerization. In a case where the monomer is a water-insoluble monomer, and the poor solvent for the monomer is water, the polymerization of the monomer and the cross-linking agent is performed by suspension polymerization. Performing the polymerization of the monomer and the cross-linking agent by suspension polymerization or reverse-phase suspension polymerization is simple, yet facilitates covering the outer surfaces of the particles of the alloy-based active material with the cross-linked polymer in a shell-like manner. In the case of suspension polymerization and reverse-phase suspension polymerization, the particle diameter D1 of the droplet is often about 10 µm to 1000 µm. Therefore, suspension polymerization and reverse-phase suspension polymerization can be suitably employed in the case of using particles of the alloy-based active material having a particle diameter of submicron to several microns. Note that liquid paraffin or the like may be used as the poor solvent for the monomer in reverse-phase suspension polymerization.

In the method for manufacturing a negative electrode material for a secondary battery according to an embodiment of the present disclosure, after using a water-insoluble monomer as the monomer, and water as the poor solvent for the monomer, in the second step, the droplet containing the monomer and the cross-linking agent may be obtained by further adding a surfactant to the poor solvent for the monomer to form a micelle of the surfactant, and causing the alloy-based active material, the monomer, and the cross-linking agent to penetrate into the micelle of the surfactant, and, in the third step, the monomer and the cross-linking agent contained in the droplet may be polymerized inside the micelle of the surfactant. That is, the method for manufacturing a negative electrode material for a secondary battery according to the embodiment of the present disclosure may be performed by emulsion polymerization. Performing the polymerization of the monomer and the cross-linking agent by emulsion polymerization is also simple, yet facilitates covering the outer surfaces of the particles of the alloy-based active material with the cross-linked polymer in a shell-like manner. In the case of emulsion polymerization, the particle diameter D1 of the droplet is often on the order of several tens of nm to several hundreds of nm. Accordingly, emulsion polymerization can be suitably used in the case of using particles of the alloy-based active material that have a nanosized particle diameter.

### [Non-Aqueous Electrolyte Secondary Battery]

A non-aqueous electrolyte secondary battery according to an embodiment of the present disclosure includes a positive electrode, a negative electrode facing the positive electrode, a separator disposed between the positive electrode and the negative electrode, a non-aqueous electrolyte, and a battery case accommodating the positive electrode, the negative electrode, the separator, and the non-aqueous electrolyte.

### (Positive Electrode)

The positive electrode includes a positive electrode current collector, and a positive electrode mixture layer formed on the positive electrode current collector. The positive electrode mixture layer includes a positive electrode active material, a binder, and a conductive additive.

The positive electrode current collector preferably has a band shape (elongated shape) in a plan view. A non-porous conductive substrate (metal foil, etc.), a porous conductive substrate (a mesh structure, a net structure, a punched sheet, etc.) can be used as the positive electrode current collector. Examples of the material of the positive electrode current collector include metal materials such as Al, an Al alloy, Ti, a Ti alloy, and an Fe alloy. The Fe alloy may be stainless steel. The thickness of the positive electrode current collector is not particularly limited to, and is preferably 1 µm to 50 µm, more preferably 5 µm to 20 µm, and still more preferably 10 µm to 20 µm.

The positive electrode mixture layer may be formed on both principal surfaces of the positive electrode current collector, or may be formed on only one principal surface thereof. In a case where the positive electrode current collector is a porous conductive substrate as described above, the positive electrode mixture layer may be formed in a state in which at least portions thereof penetrate into the pore portions of the porous substrate.

As the positive electrode active material, a material that electrochemically absorbs and desorbs lithium ions can be used. The positive electrode active material may be a lithium-containing transition metal oxide, for example. Typical examples of the lithium-containing transition metal oxide include lithium cobaltate and lithium nickelate whose crystal structures are layered structures and classified as a rock-salt crystal structure.

As the positive electrode active material, it is possible to use, for example, a composite oxide containing lithium, and a transition metal such as Ni, Co, and Mn. Examples of such a composite oxide include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiMPO₄, and Li₂MPO₄F. Note that, in the above-listed composite oxides, M is at least one selected from the group consisting of Na, Mg, Sc, Y, Mn, Fe, Co, Ni, Cu, Zn, Al, Cr, Pb, Sb, and B. In the above-listed composite oxides, a, b, and c satisfy 0 <a ≤ 1.2, 0 < b ≤ 0.9, and 2.0 ≤ c ≤ 2.3. Note that the value of a representing a molar ratio of lithium increases or decreases through charging and discharging.

As the positive electrode active material, it is preferable to use a lithium-nickel composite oxide. The lithium-nickel composite oxide can be represented, for example, by Formula (1): LiₐNi_{b}M_{1-b}O₂. Here, in Formula (1), M is at least one selected from the group consisting of Mn, Co, and Al, and a and b satisfy 0 <a ≤ 1.2, and 0.3 ≤ b < 1, respectively. From the viewpoint of increasing the capacity, b preferably satisfies 0.85 ≤ b < 1. From the viewpoint of stabilizing the crystal structure, it is preferable that the lithium-nickel composite oxide contains Co and Al as M, and is represented by Formula (2): LiₐNi_{b}Co_{c}Al_{d}O₂. Note that, in Formula (2), a, b, c, and d satisfy 0 <a ≤ 1.2, 0.85 ≤ b < 1, 0 < c < 0.15, 0 < d ≤ 0.1, and b + c + d =1.

The positive electrode active material may have an average particle size of 5 µm or more and 30 µm or less. The average particle size may be 10 µm or more. The average particle size may be 20 µm or less, or 15 µm or less.

The average particle size of the positive electrode active material is a particle size (median diameter) at a cumulative volume of 50% in a volume-based particle size distribution measured using a laser diffraction/scattering particle size distribution analyzer. As the laser diffraction/scattering particle size distribution analyzer, for example, Microtrack series MT3300 manufactured by NIKKISO CO., LTD. can be used. Note that the measurement using the particle size distribution analyzer can be performed before incorporating the positive electrode active material into the positive electrode mixture layer.

The average particle size of the positive electrode active material may be measured from a cross section, taken in the thickness direction, of a stack of the positive electrode mixture layer and the positive electrode current collector. The cross section may be formed using a cross section polisher (CP). At that time, the positive electrode mixture layer may be embedded with a thermosetting resin (epoxy resin, etc.). The measurement of the average particle size from the cross section can be performed using a scanning electron micrograph (SEM image) of the cross section. As the SEM image, it is possible to use an image captured such that 10 or more positive electrode active material particles can be observed. Then, circle-equivalent diameters of the cross sections of the ten or more positive electrode active material particles are determined by image processing, and the average value thereof is determined as an average particle size. Here, a circle-equivalent diameter refers to a diameter of a circle having the same area as the area of the cross section of each of the positive electrode active material particles (the area of each of the positive electrode active material particles measured in the cross section of the positive electrode mixture layer). Note that the average particle size of the positive electrode active material obtained with the particle size distribution analyzer, and the average particle size determined from the cross section have equivalent values.

Examples of the binder include resin materials. Examples of the resin materials include fluorocarbon resins such as polytetrafluoroethylene and polyvinylidene fluoride (PVDF); polyolefin resins such as polyethylene and polypropylene; polyamide resins such as an aramid resin; polyimide resins such as polyimide and polyamide imide; acrylic resins such as polyacrylic acid, polymethyl acrylate, and ethylene-acrylic acid copolymers; vinyl resins such as polyacrylonitrile, polyvinyl pyrrolidone, and polyvinyl acetate; polyethersulfone, and nitrile-based rubber. That is, it is preferable that a copolymer is used as the resin material. Note that a vinyl resin refers to a resin obtained by polymerizing a monomer having a vinyl group (CH₂=CH-).

As the binder, the resin materials may be used alone or in a combination of two or more.

The binder may have an average particle size of 10 µm or more and 150 µm or less.

As in the case of the average particle size of the positive electrode active material, the average particle size of the binder is also a particle size (median diameter) at a cumulative volume of 50% in a volume-based particle size distribution measured using a laser diffraction/scattering particle size distribution analyzer. As the laser diffraction/scattering particle size distribution analyzer, for example, Microtrack series MT3300 manufactured by NIKKISO CO., LTD. can be used. Note that the measurement using the particle size distribution analyzer can be performed before incorporating the binder into the positive electrode mixture layer.

In a case where the binder is a resin material, the binder can be obtained by various known polymerization methods such as suspension polymerization, emulsion polymerization, solution polymerization, and bulk polymerization. Because of the ease of adjustment of the polymerization temperature, and the ease of increasing the degree of polymerization, the polymerization method is preferably suspension polymerization or emulsion polymerization. That is, the binder is preferably a resin material obtained by suspension polymerization or emulsion polymerization.

From the viewpoint of increasing the voltage endurance, the binder preferably contains a fluorocarbon resin as the resin material, and preferably contains polyvinylidene fluoride (PVDF) among fluorocarbon resins.

The resin material contained in the binder may have a weight-average molecular weight Mw of 300,000 or more, a weight-average molecular weight Mw of 500,000 or more, or a weight-average molecular weight Mw of 1,000,000 or more. The weight-average molecular weight Mw of the resin material contained in the binder is a polystyrene equivalent value measured by gel permeation chromatography (GPC). Note that GPC measurement is usually performed using a polystyrene gel column, and water/methanol (volume ratio: 8/2) as a mobile phase.

As the conductive additive, it is possible to use, for example, a conductive carbonaceous material. Examples of the conductive carbonaceous material include carbon black, carbon nanotube, and graphite. Examples of the carbon black include acetylene black and Ketjen black. The conductive additives may be used alone or in a combination of two or more.

The positive electrode can be obtained, for example, by applying a slurry containing the constituent components of the positive electrode mixture layer and a dispersing medium onto the positive electrode current collector to form a coating film, and thereafter drying and compressing the coating film. As the dispersing medium, it is possible to use at least one selected from the group consisting of water and an organic solvent (N-methyl-2-pyrrolidone, etc.). Note that the constituent components of the positive electrode mixture layer are the positive electrode active material, the binder, the conductive additive, and so forth.

### (Separator)

For the separator, a porous sheet having ion permeability and insulating properties can be used. Examples of the form of the porous sheet include a microporous film, a woven fabric, and a non-woven fabric. The material of the separator may be a polymer material. Examples of the polymer material include an olefin resin, a polyamide resin, and cellulose. Examples of the olefin resin include polyethylene, polypropylene, and a copolymer of ethylene and propylene. The separator may contain an additive as needed. Examples of the additive include an inorganic filler.

The separator may include a plurality of layers that are different in at least one of form and composition. Such a separator may be, for example, a stack of a polyethylene microporous film and a polypropylene microporous film, or a stack of a non-woven fabric containing cellulose fibers and a non-woven fabric containing thermoplastic resin fibers.

### (Negative Electrode)

The negative electrode includes a negative electrode current collector, and a negative electrode mixture layer formed on the negative electrode current collector. The negative electrode mixture layer includes the negative electrode material for a secondary battery according to an embodiment of the present disclosure, and a binder. In the non-aqueous electrolyte secondary battery according to an embodiment of the present disclosure, the negative electrode includes the negative electrode material for a secondary battery according to an embodiment of the present disclosure by including the above-described negative electrode mixture layer.

For the negative electrode current collector, a non-porous conductive substrate (metal foil, etc.), a porous conductive substrate (a mesh structure, a net structure, a punched sheet, etc.), or the like can be used. Examples of the material of the negative electrode current collector include metal materials such as Ni, a Ni alloy, Cu, a Cu alloy, and an Fe alloy. The Fe alloy may be stainless steel. The thickness of the negative electrode current collector is not particularly limited, and is preferably 1 µm to 50 µm, and more preferably 5 µm to 20 µm.

The negative electrode mixture layer may be formed on both principal surfaces of the negative electrode current collector, or may be formed on only one principal surface thereof. In a case where the negative electrode current collector is a porous conductive substrate as described above, the negative electrode mixture layer may be formed in a state in which at least portions of the negative electrode mixture layer are embedded in the pore portions of the porous conductive substrate.

As described above, the negative electrode material for a secondary battery includes a negative electrode active material that alloys with lithium, and a cross-linked polymer. In the negative electrode material for a secondary battery, the cross-linked polymer is substantially formed by one molecule, and covers an outer surface of the negative electrode active material that alloys with lithium.

Examples of the binder include resin materials. Examples of the resin materials include fluorocarbon resins such as polytetrafluoroethylene and polyvinylidene fluoride (PVDF); polyolefin resins such as polyethylene and polypropylene; polyamide resins such as an aramid resin; polyimide resins such as polyimide and polyamide imide; acrylic resins such as polyacrylic acid, polymethyl acrylate, and an ethylene-acrylic acid copolymer; vinyl resins such as polyacrylonitrile, polyvinyl pyrrolidone, and polyvinyl acetate; polyethersulfone; and rubber-like materials such as a styrene-butadiene copolymer rubber (SBR). The binders may be used alone or in a combination of two or more.

The negative electrode mixture layer may include a carbon-based material, in addition to the negative electrode material for a secondary battery according to an embodiment of the present disclosure. Examples of the carbon-based material include graphite, graphitizable carbon (soft carbon), and non-graphitizable carbon (hard carbon). Among the above-listed carbon materials, it is preferable to use graphite because of the excellent stability during charging and discharging, and the low irreversible capacity.

Graphite refers to a carbon material having an interplanar spacing d002 of the (002) plane of, for example, 0.340 nm or less, as measured by X-ray diffractometry. A crystallite size Lc (002) of graphite as measured by X-ray diffractometry may be, for example, 5 nm or more, 5 nm or more and 300 nm or less, or 10 nm or more and 200 nm or less.

In a case where graphite and the negative electrode material for a secondary battery according to the embodiment of the present disclosure are used in combination, the proportion of the negative electrode material for a secondary battery according to an embodiment of the present disclosure in the negative electrode active material is, for example, 1 mass% or more and 20% or less. The aforementioned proportion may be 3 mass% or more and 15 mass% or less, or 3 mass% or more and 10 mass% or less. When the aforementioned proportion is within the above-described range, it is possible to achieve an improvement in the cycle characteristics and an increase in the capacity in a well-balanced manner.

The negative electrode mixture layer may include a conductive additive in addition to the negative electrode active material and the binder. As the conductive additive, it is possible to use a conductive carbonaceous material in the same manner as described for the positive electrode. In the negative electrode, it is also possible to use metal fibers, metal powder of aluminum, and the like in addition to the conductive carbonaceous material. The conductive additives may be used alone or in a combination of two or more.

The negative electrode mixture layer may include a thickener as needed. As the thickener, it is possible to use, for example, cellulose derivatives such as cellulose ether. Examples of the cellulose derivatives include carboxymethyl cellulose (CMC) and modified forms thereof, and methylcellulose. Examples of the modified forms of CMC also include salts of CMC. Examples of the salts include an alkali metal salt (e.g., a sodium salt) and an ammonium salt.

The negative electrode can be obtained, for example, by applying a slurry containing the constituent components of the negative electrode mixture layer and a dispersing medium onto the negative electrode current collector to form a coating film, and thereafter drying and compressing the coating film. As the dispersing medium, it is possible to use at least one selected from the group consisting of water and an organic solvent (N-methyl-2-pyrrolidone, etc.). Note that the constituent components of the negative electrode mixture layer are the negative electrode active material, the binder, the conductive additive, the thickener, and so forth.

### (Non-Aqueous Electrolyte)

The non-aqueous electrolyte has ion conductivity (e.g., lithium ion conductivity). The non-aqueous electrolyte may be a liquid electrolyte (electrolytic solution) or a solid electrolyte. The liquid non-aqueous electrolyte (non-aqueous electrolytic solution) contains a solvent (non-aqueous solvent), and a solute dissolved in the solvent. Examples of the solute include lithium salts. Various additives may be added to the non-aqueous electrolyte.

As the solvent, it is possible to use various known organic solvents. Examples of the solvent include a cyclic carbonic acid ester, a chain carbonic acid ester, a cyclic carboxylic acid ester, a chain carboxylic acid ester, a chain ether, a cyclic ether, a fluorinated chain ether, and a fluorinated cyclic ether.

Examples of the cyclic carbonic acid ester include propylene carbonate (PC), ethylene carbonate (EC), fluoroethylene carbonate (FEC), and vinylene carbonate (VC).

Examples of the chain carbonic acid ester include diethylene carbonate (DEC), ethyl methyl carbonate (EMC), and dimethyl carbonate (DMC).

Examples of the cyclic carboxylic acid ester include γ-butyrolactone (GBL) and γ-valerolactone (GVL).

Examples of the chain carboxylic acid ester include non-aqueous solvents such as methyl acetate, ethyl acetate, propyl acetate, methyl propionate (MP), and ethyl propionate (EP).

Examples of the chain ether include dimethyl ether, ethyl methyl ether, diethyl ether, ethyl propyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, and o-dimethoxy benzene. The chain ether may be a chain ether having two or more ether bonds. Examples of such a chain ether include 1,1-dimethoxymethane, 1,1-diethoxyethane, 1,2-dimethoxyethane (DME), 1,2-diethoxyethane, 1,2-dibutoxyethane, diethylene glycol dimethyl ether, diethylene glycol diethyl ether, diethylene glycol ethyl methyl ether, diethylene glycol dibutyl ether, triethylene glycol dimethyl ether, triethylene glycol diethyl ether, triethylene glycol ethyl methyl ether, tetraethylene glycol dimethyl ether, tetraethylene glycol diethyl ether, and tetraethylene glycol ethyl methyl ether.

Examples of the cyclic ether include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ether.

A fluorinated chain ether has a structure in which one or more hydrogens of any of the above-described chain ethers are replaced with fluorines. Examples of the fluorinated chain ether include bis(2,2,2-trifluoroethyl)ether, 1,1,2,2-tetrafluoroethyl 2,2,2-trifluoroethyl ether, and 1,1,2,2-tetrafluoroethyl 2,2,3,3-tetrafluoropropyl ether.

A fluorinated cyclic ether has a structure in which one or more hydrogens of any of the above-described cyclic ethers are replaced with fluorines. Examples of the fluorinated cyclic ether include 3,3,4,4-tetrafluorotetrahydrofuran.

The above-described various solvents (non-aqueous solvents) may be used alone or in a combination of two or more.

Examples of the lithium salts include a lithium salt of chlorine-containing acid, a lithium salt of fluorine-containing acid, a lithium salt of fluorine-containing acid imide, lithium halide, and an oxalate complex-containing lithium salt. Examples of the lithium salt of chlorine-containing acid include LiClO₄, LiAlCl₄, and LiB₁₀Cl₁₀. Examples of the lithium salt of fluorine-containing acid include LiPF₆, LiPF₂O₂, LiBF₄, LiSbF₆, LiAsF₆, LiCF₃SO₃, and LiCF₃CO₂. Examples of the lithium salt of fluorine-containing acid imide include LiN(FSO₂)₂, LiN(CF₃SO₂)₂, LiN(CF₃SO₂)(FSO₂), LiN(CF₃SO₂)(C₄F₉SO₂), and LiN(C₂F₅SO₂)₂. Examples of the lithium halide include LiCl, LiBr, and Lil. Examples of the oxalate complex-containing lithium salt include LiB(C₂O₄)₂, LiBF₂(C₂O₄), LiPF₄(C₂O₄), and LIPF₂(C₂O₄)₂. The lithium salts as described above may be used alone or in a combination of two or more.

The concentration of the lithium salt in the liquid non-aqueous electrolyte (non-aqueous electrolytic solution) may be 1 mol/L or more and 5 mol/L or less, or 1 mol/L or more and 3 mol/L or less. By setting the concentration of the lithium salt in the above-described range, it is possible to obtain a non-aqueous electrolyte (non-aqueous electrolytic solution) having good ion conductivity and an appropriate level of viscosity.

The liquid non-aqueous electrolyte (non-aqueous electrolytic solution) may contain various known additives. Examples of such additives include 1,3-propanesultone, methylbenzene sulfonate, cyclohexylbenzene, biphenyl, diphenyl ether, fluorobenzene, and ethylene sulfite (ES). Note that the cyclic carbonic acid esters such as vinylene carbonate (VC) and fluoroethylene carbonate (FEC) shown as examples of the solvent may be used to function as additives.

For example, a solid or gelled polymer electrolyte, an inorganic solid electrolyte, or the like can be used as the solid electrolyte. The polymer electrolyte contains, for example, a lithium salt and a matrix polymer, or a non-aqueous solvent, a lithium salt, and a matrix polymer. For example, a polymer material that absorbs and gelatinizes the non-aqueous solvent can be used as the matrix polymer. For example, a fluorocarbon resin, an acrylic resin, a polyether resin, or the like can be used as the polymer material. For example, materials (e.g., an oxide-based solid electrolyte, a sulfide-based solid electrolyte, a halide-based solid electrolyte, etc.) that are known for an all-solid-state lithium-ion secondary battery and the like can be used as the inorganic solid electrolyte.

Hereinafter, a specific configuration of a non-aqueous electrolyte secondary battery according to an embodiment of the present disclosure will be described with reference to FIG. 1. Note that, in the following, the non-aqueous electrolyte secondary battery according to the embodiment of the present disclosure will be simply referred to as a non-aqueous electrolyte secondary battery according to a first embodiment.

FIG. 1 is a vertical cross-sectional view schematically showing a non-aqueous electrolyte secondary battery 10 according to the first embodiment. The non-aqueous electrolyte secondary battery 10 is a cylindrical battery. The non-aqueous electrolyte secondary battery 10 includes a cylindrical battery case (battery can), a wound electrode group 14 accommodated in the battery case, and a non-aqueous electrolyte (not shown). The battery case includes a bottomed cylindrical case main body 15, and a sealing body 16 that seals an opening of the case main body 15. The case main body 15 is made of metal. A gasket 27 is disposed between the case main body 15 and the sealing body 16. The gasket 27 ensures the sealing of the battery case. The case main body 15, the sealing body 16, and the gasket 27 constitute an exterior member. Inside the case main body 15, insulating plates 17 and 18 are disposed at opposite end portions, respectively, of the electrode group 14 in the winding axis direction.

The case main body 15 has a step portion 21. The step portion 21 supports the sealing body 16. The sealing body 16 includes a filter 22, a lower valve body 23, an insulating member 24, an upper valve body 25, and a cap 26. The aforementioned members constituting the sealing body 16, except for the insulating member 24, are electrically connected to each other. The cap 26 functions as a positive electrode terminal. The case main body 15 functions as a negative electrode terminal.

The electrode group 14 is a wound electrode group formed by the positive electrode 11, the negative electrode 12, and the separator 13. The positive electrode 11, the negative electrode 12, and the separator 13 all have a band shape. The non-aqueous electrolyte secondary battery 10 according to the first embodiment includes, as the negative electrode 12, a negative electrode including the above-described negative electrode material for a secondary battery according to the embodiment of the present disclosure. The positive electrode 11, the separator 13, and the non-aqueous electrolyte can be configured in the manner described above.

The positive electrode 11 is electrically connected to the cap 26 via the positive electrode lead 19. One end of the positive electrode lead 19 is connected to the positive electrode 11. The other end of the positive electrode lead 19 is connected to the sealing body 16 (filter 22). The negative electrode 12 is electrically connected to the case main body 15 via the negative electrode lead 20. One end of the negative electrode lead 20 is connected to the negative electrode 12. The other end of the negative electrode lead 20 is connected to the case main body 15.

In the above example, the non-aqueous electrolyte secondary battery configured by accommodating a wound electrode group in a cylindrical battery case (battery can) has been described. However, the configuration of the non-aqueous electrolyte secondary battery is not limited thereto. The non-aqueous electrolyte secondary battery may be configured by accommodating a wound electrode group in a prismatic battery case (battery can). The non-aqueous electrolyte secondary battery may be configured by accommodating a stacked electrode group in a battery case such as a film exterior member (e.g., a pouch).

### (Supplementary Note)

The foregoing description discloses the following techniques.

### (Technique 1)

A negative electrode material for a secondary battery, including: particles of an alloy-based active material that alloys with lithium; and a cross-linked polymer, wherein
the cross-linked polymer covers outer surfaces of the particles of the alloy-based active material in a shell-like manner.

### (Technique 2)

The negative electrode material for a secondary battery according to technique 1, wherein the cross-linked polymer covers the outer surfaces of the particles of the alloy-based active material so as to substantially form one continuum.

### (Technique 3)

The negative electrode material for a secondary battery according to technique 1 or 2, wherein the cross-linked polymer has at least a carboxyl group.

### (Technique 4)

The negative electrode material for a secondary battery according to any one of techniques 1 to 3, wherein the cross-linked polymer has at least a structural unit derived from an ethylenically unsaturated carboxylic acid monomer.

### (Technique 5)

The negative electrode material for a secondary battery according to any one of techniques 1 to 4, wherein the cross-linked polymer is formed by a structure derived from an ethylenically unsaturated carboxylic acid monomer.

### (Technique 6)

The negative electrode material for a secondary battery according to technique 4 or 5, wherein the ethylenically unsaturated carboxylic acid monomer is acrylic acid.

### (Technique 7)

The negative electrode material for a secondary battery according to any one of techniques 1 to 6, wherein the cross-linked polymer has a structure derived from a cross-linking monomer.

### (Technique 8)

The negative electrode material for a secondary battery according to technique 7, wherein the cross-linked polymer has a structure in which one polymer having an alkenyl structure in a molecule thereof and another polymer having an alkenyl structure in a molecule thereof are cross-linked by a cross-linking monomer.

### (Technique 9)

The negative electrode material for a secondary battery according to technique 7 or 8, wherein the structure derived from the cross-linking monomer includes a structure derived from one of a multifunctional (meth)acrylate compound, a multifunctional alkenyl compound, and a compound having both a (meth)acryloyl group and an alkenyl group.

### (Technique 10)

The negative electrode material for a secondary battery according to any one of techniques 1 to 9, wherein the particles of the alloy-based active material contain silicon.

### (Technique 11)

The negative electrode material for a secondary battery according to any one of techniques 3 to 10, wherein the cross-linked polymer has a carboxyl group neutralized with a lithium compound.

### (Technique 12)

The negative electrode material for a secondary battery according to any one of techniques 1 to 11, wherein the particles of the alloy-based active material are aggregated in a state in which the outer surfaces thereof are covered with the cross-linked polymer.

### (Technique 13)

A non-aqueous electrolyte secondary battery including: a positive electrode; a negative electrode facing the positive electrode; a separator disposed between the positive electrode and the negative electrode; and a non-aqueous electrolytic solution, wherein the negative electrode includes the negative electrode material for a secondary battery according to any one of techniques 1 to 11.

### (Technique 14)

A method for manufacturing a negative electrode material for a secondary battery, the method including: a first step of obtaining a mixed solution containing a monomer, a cross-linking agent for the monomer, and particles of an alloy-based active material that alloys with lithium;
a second step of adding a poor solvent for the monomer to the mixed solution after the first step, to obtain a droplet containing the monomer and the cross-linking agent; and
a third step of polymerizing the monomer and the cross-linking agent contained in the droplet after the second step, to cover outer surfaces of the particles of the alloy-based active material with a shell-like cross-linked polymer.

### (Technique 15)

The method for manufacturing a negative electrode material for a secondary battery according to technique 14, wherein, in the second step, the droplet containing the monomer and the cross-linking agent is obtained by suspending the monomer, the cross-linking agent, and the particles of the alloy-based active material in the poor solvent for the monomer.

### (Technique 16)

The method for manufacturing a negative electrode material for a secondary battery according to technique 15, wherein the monomer is a water-soluble monomer, and the poor solvent for the monomer is a non-aqueous solvent.

### (Technique 17)

The method for manufacturing a negative electrode material for a secondary battery according to technique 14, wherein
the monomer is a water-insoluble monomer, and the poor solvent for the monomer is water,
in the second step, the droplet containing the monomer and the cross-linking agent is obtained by further adding a surfactant to the poor solvent for the monomer to form a micelle of the surfactant, and causing the particles of the alloy-based active material, the monomer, and the cross-linking agent to penetrate into the micelle of the surfactant, and,
in the third step, the monomer and the cross-linking agent contained in the droplet are polymerized inside the micelle of the surfactant.

### (Technique 18)

A negative electrode material for a secondary battery, the negative electrode material being obtainable by: encapsulating, in a droplet of a polymerization component containing a monomer and a cross-linking agent for the monomer, particles of an alloy-based active material that alloys with lithium; and polymerizing the monomer and the cross-linking agent contained in the droplet, to cover outer surfaces of the particles of the alloy-based active material with a shell-like coating of the polymerization component.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Examples]

Hereinafter, the present disclosure will be specifically described by way of examples and comparative examples. However, the present disclosure is not limited to the following examples.

### [Example 1]

### (1) Production of Positive Electrode

A positive electrode active material (LiNi_{0.88}Co_{0.00}Al_{0.03}O₂), a conductive additive (acetylene black), a binder (polyvinylidene fluoride (PVdF)) were mixed at a mass ratio of 100:0.8:0.7, to obtain a positive electrode mixture. To the positive electrode mixture, N-methyl-2-pyrrolidone serving as a dispersing medium was added in an appropriate amount, and the mixture was stirred, to obtain a positive electrode mixture slurry.

The positive electrode mixture slurry according to Example 1 was applied to both surfaces of an aluminum foil (with a thickness of 15 µm) serving as a positive electrode current collector to form a coating film, and the coating film was dried, followed by compressing the dried coating film in a thickness direction thereof using a roller, to form a positive electrode mixture layer on the positive electrode current collector. Then, the resulting stack of the positive electrode current collector and the positive electrode mixture layer was cut in a predetermined size. In this manner, a positive electrode according to Example 1 was obtained.

### (2) Negative Electrode

A negative electrode active material (graphite and composite particles A), a binder (styrene-butadiene copolymer rubber (SBR)), a thickener (carboxymethyl cellulose (CMC)) were mixed at a mass ratio of 100:1:1, to obtain a negative electrode mixture. To the negative electrode mixture, water serving as a dispersing medium was added in an an appropriate amount, and the mixture was stirred, to obtain a negative electrode mixture slurry. In the negative electrode active material, the breakdown of the mass ratio of graphite and the composite particles A was 95:5. The composite particles A were obtained through Procedures 1 and 2 below, and, specifically, obtained by covering outer surfaces of nano-silicon particles (with an average particle diameter of 200 nm) with a cross-linked polymer substantially constituting a continuum. Note that the composite particles A being formed in the above-described manner was confirmed according to the method described in the above embodiment.

### <Procedure 1>

(1) In a 200-mL four-necked flask, acrylic acid (ethylenically unsaturated carboxylic acid monomer), sorbitan monostearate (surfactant), 1,3-diallyloxy-2-propanol (cross-linking monomer), and V-501 (polymerization initiator) were contained, and the aforementioned components were stirred and mixed using a stirrer tip, to obtain a mixed solution.
(2) After addition of nano-silicon particles to the mixed solution, the mixed solution containing the nano-silicon particles was stirred and mixed at room temperature (23±2°C), to obtain a nano-silicon dispersed solution.
(3) To the nano-silicon dispersed solution, liquid paraffin (poor solvent for a monomer) containing sorbitan monostearate (surfactant) was added, and the mixture was stirred and mixed, to obtain a reaction solution. Note that the flask was degassed with argon gas during the stirring and mixing.
(4) While introducing argon gas into the flask, the reaction solution was heated until the solution temperature reached 65°C, to start a polymerization reaction of the acrylic acid.
(5) After terminating the reaction after 16 hours from the start of the reaction to obtain a reaction product, 400 mL of tetrahydrofuran (THF) was added into the flask, and stirred to wash the reaction product.
(6) The washed reaction product was subjected to suction filtration using filter paper (No. 2) to recover solids.
(7) The washing of the solids with 400 mL of THF and the recovery of the solids by suction filtration were repeated three times in total, and thereafter the solids that had been subjected to the third suction filtration were dried at 50°C for 12 hours.
(8) The dried solids were ground with a mortar, to obtain a composite particle intermediate a.

### <Procedure 2>

(1) The composite particle intermediate a and acetonitrile were placed in a 300-mL recovery flask, and stirred with a stirrer tip, to obtain a mixed solution.
(2) To the mixed solution, lithium hydroxide monohydrate (LiOH·H₂O) was added, and the mixture was stirred for 24 hours at room temperature (23±2°C), to obtain a reaction liquid.
(3) A portion of the reaction liquid was sampled, and the sampled liquid was subjected to IR analysis to confirm completion of the reaction.
(4) The reaction liquid was subjected to suction filtration with filter paper (No. 2) to recover first solids.
(5) To the first solids, 300 mL of acetonitrile was added, and the mixture was stirred and washed for 15 minutes.
(6) The washed liquid was subjected to suction filtration with filter paper (No. 2) to recover second solids, and the second solids were dried under reduced pressure for 24 hours at 50°C.
(7) The dried second solids were recovered, to obtain composite particles A.

Note that the composite particles A had a mass yield of 13.27 g, and a percentage yield of 73.6%. In addition, the composite particles A were obtained by covering outer surfaces of nano-silicon particles with a cross-linked polyacrylic acid (PAA), and had a polymer ratio of 75 mass%. Furthermore, Procedure 1 above was performed using a formulation shown in Table 1 below, and Procedure 2 above was performed using a formulation shown in Table 2 below. Note that the polymer ratio was calculated based on charge amounts listed Formulation 1 shown in Table 1 below.

**[Table 1]**

| | Component | Mass [g] |
|---|---|---|
| Nano-silicon dispersed solution | Nano-silicon particles | 4.50 |
| | Acrylic acid | 13.52 |
| | 1,3-Diallyloxy-2-propanol | 0.65 |
| | V-501 | 0.11 |
| | Sorbitan monostearate | 0.27 |
| Poor solvent for monomer | Liquid paraffin | 56.01 |
| | Sorbitan monostearate | 1.12 |

**[Table 2]**

| | Mass [g] |
|---|---|
| PAA-covered Si particles | 15.00 |
| LiOH·H₂O | 7.20 |
| Acetonitrile | 120.00 |

The negative electrode mixture slurry according to Example 1 was applied to both surfaces of a copper foil (with a thickness of 15 µm) serving as a negative electrode current collector to form a coating film, and the coating film was dried, followed by compressing the dried coating film in a thickness direction thereof using a roller, to form a negative electrode mixture layer on the negative electrode current collector. Then, the resulting stack of the negative electrode current collector and the negative electrode mixture layer was cut in a predetermined size. In this manner, a negative electrode according to Example 1 was obtained.

### (3) Non-Aqueous Electrolyte (Non-Aqueous Electrolytic Solution)

Ethylene carbonate (EC), ethyl methyl carbonate (EMC), and dimethyl carbonate (DMC) were mixed at a volume ratio of 2:2:6 (EC:EMC:DMC), and vinylene carbonate was further added thereto to obtain a non-aqueous solvent mixture. Thereafter, LiPF₆ was dissolved in the non-aqueous solvent to prepare a non-aqueous electrolyte (non-aqueous electrolytic solution). The content of VC relative to the entire non-aqueous electrolyte was 2 mass%. The concentration of LiPF₆ in the non-aqueous electrolyte was 1.3 mol/L. Note that, in addition to functioning as the non-aqueous solvent, VC also functions as an additive for forming a good SEI coating on an outer surface of the graphite contained in the negative electrode active material.

### (4) Production of Secondary Battery

One end side of a positive electrode lead made of aluminum was attached to the aluminum foil serving as the positive electrode current collector by welding. One end side of a negative electrode lead made of nickel was attached to the copper foil serving as the negative electrode current collector by welding. Then, in an inert gas atmosphere, the positive electrode and the negative electrode were stacked with a separator interposed therebetween to obtain a stack, followed by winding the stack to obtain a wound electrode group. As the separator, a microporous film made of polyethylene was used.

Next, as shown in FIG. 1, the wound electrode group (electrode group 14) and the non-aqueous electrolyte (non-aqueous electrolytic solution) were accommodated in the cylindrical battery case, to complete a secondary battery. Note that, as shown in FIG. 1, in the wound electrode group (electrode group 14), the positive electrode 11 is connected to the sealing body 16 via the positive electrode lead 19, and the negative electrode 12 is connected to the case main body 15 via the negative electrode lead 20. The other end side of the positive electrode lead 19 is connected to the sealing body 16, and the other end side of the negative electrode lead 20 is connected to the case main body 15. As described in the relevant section of the embodiment, the cap 26 included in the sealing body 16 functions as a positive electrode terminal, and the case main body 15 functions as a negative electrode terminal.

### [Example 2]

A negative electrode was produced using composite particles B in place of the composite particles A in the negative electrode active material. Except for the negative electrode, a secondary battery according to Example 2 was obtained in the same manner as in Example 1. Note that the composite particles B were obtained in the same manner as with the composite particles A except that the mass of the nano-silicon particles in Formulation 1 was changed to 13.5 g. That is, the composite particles B were also obtained by covering outer surfaces of nano-silicon particles with a cross-linked polyacrylic acid (PAA) by reverse-phase suspension polymerization. Note that the composite particles B had a mass yield of 21.31 g, and a percentage yield of 78.8%. In the composite particles B, the polymer ratio was 50 mass%.

### [Example 3]

A negative electrode was produced using composite particles C in place of the composite particles A in the negative electrode active material. Except for the negative electrode, a secondary battery according to Example 3 was obtained in the same manner as in Example 1. Note that the composite particles C were obtained in the same manner as with the composite particles A except that the mass of the nano-silicon particles in Formulation 1 was changed to 40.5 g. That is, the composite particles C were also obtained by covering outer surface of nano-silicon particles with a cross-linked polyacrylic acid (PAA) by reverse-phase suspension polymerization. Note that the composite particles C had a mass yield of 42.87 g, and a percentage yield of 79.4%. In the composite particles C, the polymer ratio was 25 mass%.

### [Comparative Example 1]

A negative electrode was produced using nano-silicon particles whose outer surfaces were not covered with a polymer in place of the composite particles A in the negative electrode active material. Except for the negative electrode, a secondary battery according to Comparative Example 1 was obtained in the same manner as in Example 1.

### [Comparative Example 2]

A negative electrode was produced using composite particles D in place of the composite particles A in the negative electrode active material. Except for the negative electrode, a secondary battery according to Comparative Example 2 was obtained in the same manner as in Example 1. Note that the composite particles D were obtained by producing a mixed aqueous solution in which nano-silicon particles and a cross-linked sodium polyacrylate were mixed at a mass ratio of 80:20 (nano-silicon particles:cross-linked sodium polyacrylate), and spray-drying the mixed aqueous solution at a hot air temperature of 150°C, to cover outer surfaces of the nano-silicon particles with the polymer. In the composite particles D, the polymer ratio was 20 mass%.

### [Comparative Example 3]

A negative electrode was produced using composite particles E in place of the composite particles A in the negative electrode active material. Except for the negative electrode, a secondary battery according to Comparative Example 3 was obtained in the same manner as in Example 1. Note that the composite particles E were obtained by producing a mixed aqueous solution in which nano-silicon particles and a cross-linked sodium polyacrylate were mixed at a mass ratio of 95:5 (nano-silicon particles:cross-linked sodium polyacrylate), and spray-drying the mixed aqueous solution at a hot air temperature of 150°C, to cover outer surfaces of the nano-silicon particles with the polymer. In the composite particles E, the polymer ratio was 5 mass%.

For the negative electrode material for a secondary battery of each of the examples (Examples 1 to 3 and Comparative Examples 1 to 4), the type of the alloy-based active materials, the type of the covering polymer, the covering method, and the polymer ratio are collectively shown in Table 3 below.

**[Table 3]**

| | Alloy-based active material | Covering polymer | Covering method | Polymer ratio [mass%] |
|---|---|---|---|---|
| Example 1 | Silicon nanoparticles | Cross-linked polyacrylic acid (PAA) | Reverse-phase suspension polymerization | 75% |
| Example 2 | Silicon nanoparticles | Cross-linked polyacrylic acid (PAA) | Reverse-phase suspension polymerization | 50% |
| Example 3 | Silicon nanoparticles | Cross-linked polyacrylic acid (PAA) | Reverse-phase suspension polymerization | 25% |
| Com Ex. 1 | Silicon nanoparticles | - | - | - |
| Com Ex. 2 | Silicon nanoparticles | Cross-linked polyacrylic acid (PAA) | Spray drying | 20% |
| Com Ex. 3 | Silicon nanoparticles | Cross-linked polyacrylic acid (PAA) | Spray drying | 5% |

### <Evaluation>

### Cycle Retention

A charge-discharge cycle in which each battery was charged at a constant current of 0.5C until the battery voltage reached 4.2 V, then charged at a voltage of 4.2 V until the current value reached 1/50C, and then discharged at a constant current of 0.5C until the battery voltage reached 2.5 V was repeated until the capacity retention rate calculated with the following expression reached 80%. Then, the number of cycles at which the capacity retention rate reached 80% was determined. Based on this, the cycle retention of each of the secondary batteries according to the examples (Examples 1 to 3 and Comparative Examples 1 to 3) was evaluated. The results (numbers of cycles) of evaluating the cycle retention were shown in Table 4 below. Note that, in the evaluation of the cycle retention, the larger the number of cycles, the better the result of evaluation was.$Capacity retention rate \left(%\right) = \left(Discharge capacity at Nth cycle\right) / \left(Discharge capacity at 1st cycle\right) \times 100$

In addition, for each of the examples, the covering form of the negative electrode material for a secondary battery is also shown in Table 4 below. Note that, in Table 4, the term "continuum" means that a cross-linked polyacrylic acid covers the outer surfaces of the nano-silicon particles so as to form one continuum, and the term "non-continuum" means that a plurality of cross-linked polyacrylic acids cover the outer surfaces of the nano-silicon particles such that terminal parts thereof overlap each other.

**[Table 4]**

| | Covering form | Cycle retention [number of cycles] |
|---|---|---|
| Example 1 | Continuum | 100 |
| Example 2 | Continuum | 90 |
| Example 3 | Continuum | 60 |
| Com Ex. 1 | - | 11 |
| Com Ex. 2 | Non-continuum | 23 |
| Com Ex. 3 | Non-continuum | 18 |

From Table 4, it is confirmed that, in the secondary batteries according to Examples 1 to 3, a cross-linked polyacrylic acid covers the outer surfaces of the nano-silicon particles so as to form one continuum, and the number of cycles as the indicator for the evaluation of the cycle retention was above 50 cycles for all of these secondary batteries. In contrast, in the secondary batteries according to Comparative Examples 2 and 3, it is confirmed that a plurality of cross-linked polyacrylic acids cover the outer surfaces of the nano-silicon particles such that terminal parts thereof overlap each other, and the numbers of cycles of these batteries were as low as 23 cycles and 18 cycles, respectively. Also for Comparative Example 1 in which silicon particles whose outer surfaces were not covered with a polymer, the number of cycles was as low as 11 cycles. This demonstrates that a secondary battery capable of sufficiently maintaining the cycle characteristics can be obtained by using, as a negative electrode material for the secondary battery, a material obtained by covering an outer surface of an alloy-based active material that alloys with lithium with a cross-linked polymer so as to substantially form one continuum.

### [Industrial Applicability]

The negative electrode material for a secondary battery according to the present disclosure is applicable to a non-aqueous electrolyte secondary battery that is required to sufficiently maintain the cycle characteristics.

### [Reference Signs List]

- 10:: Non-aqueous electrolyte secondary battery
- 11:: Positive electrode
- 12:: Negative electrode
- 13:: Separator
- 14:: Electrode group
- 15:: Case main body
- 16:: Sealing body
- 27:: Gasket

## Claims

1. A negative electrode material for a secondary battery, comprising:
particles of an alloy-based active material that alloys with lithium; and
a cross-linked polymer, wherein
the cross-linked polymer covers outer surfaces of the particles of the alloy-based active material in a shell-like manner.

2. The negative electrode material for a secondary battery according to claim 1, wherein
the cross-linked polymer covers the outer surfaces of the particles of the alloy-based active material so as to substantially form one continuum.

3. The negative electrode material for a secondary battery according to claim 1, wherein
the cross-linked polymer has at least a carboxyl group.

4. The negative electrode material for a secondary battery according to claim 1, wherein
the cross-linked polymer has at least a structural unit derived from an ethylenically unsaturated carboxylic acid monomer.

5. The negative electrode material for a secondary battery according to claim 1, wherein
the cross-linked polymer is formed by a structure derived from an ethylenically unsaturated carboxylic acid monomer.

6. The negative electrode material for a secondary battery according to claim 4 or 5, wherein
the ethylenically unsaturated carboxylic acid monomer is acrylic acid.

7. The negative electrode material for a secondary battery according to any one of claims 1 to 5, wherein
the cross-linked polymer has a structure derived from a cross-linking monomer.

8. The negative electrode material for a secondary battery according to claim 7, wherein
the cross-linked polymer has a structure in which one polymer having an alkenyl structure in a molecule thereof and another polymer having an alkenyl structure in a molecule thereof are cross-linked by a cross-linking monomer.

9. The negative electrode material for a secondary battery according to claim 7, wherein
the structure derived from the cross-linking monomer includes a structure derived from one of a multifunctional (meth)acrylate compound, a multifunctional alkenyl compound, and a compound having both a (meth)acryloyl group and an alkenyl group.

10. The negative electrode material for a secondary battery according to any one of claims 1 to 5, wherein
the particles of the alloy-based active material contain silicon.

11. The negative electrode material for a secondary battery according to any one of claims 3 to 5, wherein
the cross-linked polymer has a carboxyl group neutralized with a lithium compound.

12. The negative electrode material for a secondary battery according to any one of claims 1 to 5, wherein
the particles of the alloy-based active material are aggregated in a state in which the outer surfaces thereof are covered with the cross-linked polymer.

13. A non-aqueous electrolyte secondary battery comprising:
a positive electrode;
a negative electrode facing the positive electrode;
a separator disposed between the positive electrode and the negative electrode; and
a non-aqueous electrolyte, wherein
the negative electrode includes the negative electrode material for a secondary battery according to any one of claims 1 to 5.

14. A method for manufacturing a negative electrode material for a secondary battery, the method comprising:
a first step of obtaining a mixed solution containing a monomer, a cross-linking agent for the monomer, and particles of an alloy-based active material that alloys with lithium;
a second step of adding a poor solvent for the monomer to the mixed solution after the first step, to obtain a droplet containing the monomer and the cross-linking agent; and
a third step of polymerizing the monomer and the cross-linking agent contained in the droplet after the second step, to cover outer surfaces of the particles of the alloy-based active material with a shell-like cross-linked polymer.

15. The method for manufacturing a negative electrode material for a secondary battery according to claim 14, wherein,
in the second step, the droplet containing the monomer and the cross-linking agent is obtained by suspending the monomer, the cross-linking agent, and the particles of the alloy-based active material in the poor solvent for the monomer.

16. The method for manufacturing a negative electrode material for a secondary battery according to claim 15, wherein
the monomer is a water-soluble monomer, and the poor solvent for the monomer is a non-aqueous solvent.

17. The method for manufacturing a negative electrode material for a secondary battery according to claim 14, wherein
the monomer is a water-insoluble monomer, and the poor solvent for the monomer is water,
in the second step, the droplet containing the monomer and the cross-linking agent is obtained by further adding a surfactant to the poor solvent for the monomer to form a micelle of the surfactant, and causing the particles of the alloy-based active material, the monomer, and the cross-linking agent to penetrate into the micelle of the surfactant, and,
in the third step, the monomer and the cross-linking agent contained in the droplet are polymerized inside the micelle of the surfactant.

18. A negative electrode material for a secondary battery, the negative electrode material being obtainable by:
encapsulating, in a droplet of a polymerization component containing a monomer and a cross-linking agent for the monomer, particles of an alloy-based active material that alloys with lithium; and polymerizing the monomer and the cross-linking agent contained in the droplet, to cover outer surfaces of the particles of the alloy-based active material with a shell-like coating of the polymerization component.
